# EUROPÄISCHE PATENTANMELDUNG

(11) **EP 1 231 161 A1**
(43) Veröffentlichungstag der Anmeldung: **14.08.2002**
(21) Anmeldenummer: 01102848.7
(22) Anmeldetag: 13.02.2001
(51) Int. Cl.: B65F 1/10, B65G 69/04

(54) **Vorrichtung zur Verteilung von Gütern in einem Behälter**

(71) Anmelder: Elektromanufaktur Zangenstein, Hanauer GmbH & Co. KGaA, 92507 Nabburg (DE)
(72) Erfinder: Beer, Thomas, 92447 Schwarzhofen (DE); Sorgenfrei, Michael, 92447 Schwarzhofen (DE)
(74) Vertreter: von Hellfeld, Axel, Dr. Dipl.-Phys.

(57) **Zusammenfassung**

Zur besseren Verteilung von Gütern in einem Behälter wird eine Vorrichtung zur Verteilung derselben bereitgestellt, die eine Pralleinrichtung aufweist, die beim Befüllen des Behälters von dem entsprechenden Füllgut kontaktiert und aus einem Ruhezustand ausgelenkt wird. Aufgrund einer federaritgen elastischen Charakteristik der Pralleinrichtung und/oder einer pendelartigen Aufhängung derselben werden auf diese Weise Rückstellkräfte zur Bewegung der Pralleinrichtung in ihren Ruhezustand erzeugt und so Kräfte auf das in dem Behälter zu sammelnde Gut ausübt. Diese Kräfte verursachen eine Bewegung/Beschleunigung des Gutes in einer Richtung, die von der Fallrichtung abweicht, entlang der sich das Gut beim Einbringen in den Behälter ohne die erfindungsgemaße Vorrichtung bewegen würde. In Abhängigkeit von der Art und Form des eingebrachten Guutes und/oder dem jeweiligen Kontaktbereich des Gutes mit der Pralleinrichtung wird so eine züfallige Vertielung des Gutes im Innenraum des Behälters bewirkt. Diese züfallige Verteilung des Gutes in dem Behälter verhindert die Bildung eines Schüttkegels und sorgt für eine gleichmaßige Verteilung des Gutes in dem Behälter, wodurch dessen Fassungs volumen besser genutzt wird.

## Beschreibung

### Gebiet der Erfindung

Die vorliegende Erfindung betrifft eine Vorrichtung zur Verteilung von Gütern in einem Behälter. Insbesondere betrifft die vorliegende Erfindung eine Vorrichtung zur Verteilung von in einen Müllbehälter einzubringendem Müll.

### Hintergrund der Erfindung

Werden Behälter über eine Zugriffseinrichtung (z.B. Einfüllöffnungen, Schleusen) mit Gütern befüllt, bilden sich normalerweise in einem Bereich im wesentlichen unterhalb der Zugriffseinrichtung des Innenraums des Behälters sogenannte Schüttberge oder -kegel durch eine Anhäufung/Ansammlung der eingebrachten Güter in diesem Innenraumbereich. Demgegenüber sammeln sich in den Behälter eingebrachte Güter in den diesem Bereich benachbarten, von der Zugriffseinrichtung weiter entfernt liegenden Bereichen des Innenraums in geringerem Ausmaß. Dadurch wird das tatsächliche Fassungsvermögen des Behälters nicht optimal ausgenutzt, da in verfügbaren Bereichen des Innenraums des Behälters keine Güter gesammelt werden und keine weiteren Güter eingebracht werden können, wenn der Schüttkegel eine von der Dimensionierung des Behälters und der Art und Form der Zugriffseinrichtung abhängige Höhe erreicht hat. Beispiele für Behälter, bei denen derartige Schüttkegel auftreten können, sind Müllcontainer und Mülltonnen.

Die Bildung von Schüttkegeln ist auch möglich, wenn beim Befüllen von Behältern ohne spezielle Zugriffseinrichtungen, i.e. bei offenen Behältern, die betreffenden Güter von einer im wesentlichen gleichbleibenden Position in den Behälter eingebracht werden.

Um eine bessere Verteilung von Gütern in Behältern zu erreichen und die Bildung von Schüttkegeln zu vermeiden, ist es bekannt, in einen Behälter eingebrachte Güter durch Bewegungen des Behälters besser in diesem zu verteilen. Dies erfordert zusätzliche im wesentlichen mechanische Komponenten (Antriebe), die den Behälter geeignet bewegen. Des weiteren ist dieser Ansatz bei Behältern mit Zugriffseinrichtungen nur eingeschränkt anwendbar, da Bewegungen des Behälters und somit auch der Zugriffseinrichtung ein Befüllen erschwert und zum Teil unmöglich macht.

Bei offenen Behältern, d.h. bei Behältern ohne spezielle Zugriffseinrichtungen, können alternativ oder ergänzend zu Behälterbewegungen auch entsprechende Zufuhreinrichtungen (z.B. Einfüllstutzen, Befülltrichter, Auswurfschächte, ...) bewegt werden. Auch hier sind zusätzliche gesteuerte Komponenten zur Erzeugung dieser Bewegungen erforderlich.

### Aufgabe der Erfindung

Aufgabe der vorliegenden Erfindung ist es, eine Vorrichtung bereitzustellen, die beim Befüllen eines Behälters mit Gütern diese im Innenraum des Behälters optimal verteilt und dadurch eine verbesserte Ausnutzung des Fassungsvermögens des Behälters gewährleistet.

### Kurzbeschreibung der Erfindung

Zur Lösung der Aufgabe stellt die Erfindung eine Vorrichtung zur Verteilung von Gütern in einem Behälter gemäß Anspruch 1 bereit.

Die Vorrichtung weist bevorzugt eine Pralleinrichtung auf, die beim Einbringen eines Gutes in einen Behälter von dem Gut kontaktiert und aus einer Ruhestellung bewegt/ausgelenkt wird. Dabei ist die Pralleinrichtung so ausgestaltet, daß sie sich in Antwort auf den Impuls des Gutes und der dadurch verursachten Bewegung/Auslenkung aus dem Ruhezustand wieder in ihren Ruhezustand zurückbewegt. Dabei übt die Pralleinrichtung auf das Gut Kräfte aus, die das Gut statistisch variierend bewegen und in dem Behälter verteilen.

Insbesondere weist die Pralleinrichtung eine oder mehrere Prallflächen auf, die in Abhängigkeit der Art und Form einzubringender Güter und/oder des Behälters so gestaltet sind, daß sie beim Einbringen des Gutes in den Behälter von diesem kontaktiert werden.

Vorzugsweise werden ein oder mehrere Prallkörper verwendet, die eine oder mehrere Prallflächen aufweisen.

Damit sich die Pralleinrichtung bei einem Kontakt mit einem Gut, das in den Behälter eingebracht wird, wieder in ihre Ausgangsstellung zurückbewegt und so dem Gut einen Impuls in Querrichtung, bezogen auf die Vertikale, erteilt, weist die Pralleinrichtung eine federartige, elastische oder vergleichbare Charakteristik auf, die eine derartige Rückbewegung gewährleistet. Hierbei kann die Pralleinrichtung wenigstens ein Federelement aufweisen, das mit der wenigstens einen Prallfläche und/oder dem wenigstens einen Prallkörper so verbunden ist, daß die wenigstens eine Prallfläche und/oder der wenigstens eine Prallkörper nach einer Auslenkung aus der Ausgangsposition wieder zurückbewegt wird. Diese Eigenschaft der Pralleinrichtung kann auch bereitgestellt werden, indem anstelle oder ergänzend zu dem Federelement die wenigstens eine Prallfläche und/oder der wenigstens eine Prallkörper zumindest bereichsweise elastisch verformbar sind, um die federartige Charakteristik bereitzustellen. Ferner kann die Pralleinrichtung in dem Behälter elastisch hängend befestigt sein, wobei hier die Rückstellkraft zur Bewegung der Pralleinrichtung in ihren Ruhezustand durch die Masse der Pralleinrichtung, optional in Verbindung mit einem Federelement, erzeugt wird.

In Abhängigkeit vom verwendeten Behälter kann die erfindungsgemäße Vorrichtung im Innenraum des Behälters, vorzugsweise unterhalb einer entsprechenden Zugriffseinrichtung für den Behälter, angeordnet sein. Hierbei ist es möglich, die erfindungsgemäße Vorrichtung an einer Innenfläche des Behälters und/oder im Bereich der Zugriffseinrichtung an einer Außenfläche des Behälters zu befestigen oder zu sichern.

Insbesondere bei offenen Behältern, die zum Befüllen keine spezielle Zugriffseinrichtung sondern eine Öffnung aufweisen, die normalerweise im wesentlichen größer als das Füllgut ist, kann die erfindungsgemäße Vorrichtung auf einer Bodenfläche im Innenraum des Behälters angeordnet werden. Hierbei sollte die erfindungsgemäße Vorrichtung im wesentlichen unterhalb der Stelle positioniert sein, an der der Behälter normalerweise befüllt wird.

Des weiteren kann die erfindungsgemäße Vorrichtung die Verteilung von Gütern in einem Behälter verbessern, wenn sie an einem Auslaß einer zum Befüllen des Behälters verwendeten Zufuhreinrichtung, z.B. einer sogenannten Müllschleuse, angeordnet ist. In Abhängigkeit von den Abmessungen der in diesem Fall verwendeten Behälter ist es nicht erforderlich, daß sich die Pralleinrichtung in dem von dem Behälter umschlossenen Raum befindet. So kann die Pralleinrichtung auch oberhalb des von dem Behälter umschlossenen Raumes positioniert sein, solange die Ausführung der Pralleinrichtung und insbesonderé deren federartigen, elastischen und/oder pendelartigen Charakteristik gewährleistet, daß bei der erfindungsgemäßen Verteilung der Güter diese in den Behälter eingebracht werden.

Des weiteren ist es vorgesehen, daß die erfindungsgemäße Vorrichtung eine Sensoreinrichtung umfaßt, um auf die Pralleinrichtung wirkende Kräfte und/oder von der Pralleinrichtung erzeugte (Rückstell-)kräfte zu erfassen. Auf diese Weise ist es möglich, das Gewicht von in den Behälter eingebrachten Güter zu ermitteln. Des weiteren können so Verteilungsrichtung und/oder -distanz für jedes in den Behälter eingebrachtes Gut ermittelt werden.

Die erfindungsgemäße Vorrichtung ermöglicht also eine gleichmäßigere Verteilung des Gutes in dem Behälter und damit auch eine kompaktere Schichtung des Gutes, so daß die insgesamt in dem Behälter unterzubringende Gutmenge deutlich erhöht ist. Dies gilt insbesondere für Müllbehälter, in die Gut sehr unterschiedlicher Art und Form eingebracht wird.

### Kurzbeschreibung der Figuren

In der folgenden Beschreibung wird auf die beigefügten Figuren Bezug genommen, von denen zeigen:
- Fig. 1: eine schematische Querschnittsansicht eines herkömmlichen Müllcontainers,
- Fig. 2: eine Querschnittsansicht eines Müllcontainers mit einer Ausführungsform der erfindungsgemäßen Vorrichtung,
- Fig. 3: eine schematische Querschnittsansicht eines Müllcontainers mit einer brotkastenartigen Schleuse und der Ausführungsform der erfindungsgemäßen Vorrichtung von Fig. 2,
- Fig. 4: verschiedene Ausführungsformen der Pralleinrichtung der erfindungsgemäßen Vorrichtung von Fig. 2,
- Fig. 5: weitere Ausführungsformen von Pralleinrichtungen für die erfindungsgemäße Vorrichtung von Fig. 2,
- Fig. 6: schematische Querschnittsansichten von Müllcontainern mit erfindungsgemäßen Pralleinrichtungen von Fig. 5,
- Fig. 7: eine schematische Querschnittsansicht eines Müllcontainers mit mehreren Zugriffseinrichtungen und einer weiteren Ausführungsform der erfindungsgemäßen Vorrichtung,
- Fig. 8: schematische Querschnittsansichten verschiedener Ausführungsformen der erfindungsgemäßen Vorrichtung von Fig. 7,
- Fig. 9: schematische Querschnittsansichten von offenen Behältern mit weiteren Ausführungsformen der erfindungsgemäßen Vorrichtung,
- Fig. 10: eine schematische Querschnittsansicht eines offenen Behälters mit einer Ausführungsform einer erfindungsgemäßen Pralleinrichtung gemäß den Ausführungsformen von Fig. 5, und
- Fig. 11: eine schematische Querschnittsansicht eines offenen Behälters und einer Zufuhrvorrichtung zum Befüllen des offenen Behälters, an der eine erfindungsgemäße Vorrichtung angeordnet ist.

### Beschreibung bevorzugter Ausführungsformen

Bei der folgenden Beschreibung bevorzugter Ausführungsformen wird die Erfindung am Beispiel von Müllcontainern (Behälter für Müll) erläutert. Das der Erfindung zugrundeliegende Prinzip ist darüberhinaus bei Behältern unterschiedlicher Bauformen (z.B. geschlossene und offene kasten- oder trogförmige, halbschalenartige, zylindrische, tonnen- oder containerartige Behälter) zur Aufnahme von Füllgut (z.B. Granulate, Metallteile und Kunststoffteile), bei denen sich beim Befüllen mit Fullgut Schüttkegel bilden, die die Ausnutzung des Fassungsvermögens der Behälter verschlechtern, verwendbar.

Die Bildung solcher Schüttkegel ist im wesentlichen darauf zurückzuführen, daß beim Befüllen der Behälter das entsprechende Füllgut von einer ortsfesten Stelle eingebracht wird. Diese gleichbleibenden Einfüllpositionen werden beispielsweise durch Zugriffseinrichtungen für den Behälter (z.B. Klappen, Türen, Schleusen) und durch die Anordnung von zur Zufuhr von Füllgut verwendeten Einrichtungen (z.B. Befüllstutzen und -schläuche, Einrichtungen von Be- und Verarbeitungsmaschinen zur Ausgabe von be- und verarbeiteten Gütern als Füllgut) vorgegeben.

Anwendungsbeispiele für die Erfindung umfassen neben den genannten Müllcontainern Behälter zur Aufnahme von Metall- und Kunststoffteilen nach ihrer Ver- oder Bearbeitung in entsprechenden Maschinen, Behälter zur Aufnahme von Granulaten, wie z.B. Waschpulver und Kunststoffpellets, Transsport- und Bevorratungsbehälter (z.B. auf Lastkraftwagen angeordnete Tanks und Container, Behälter zur Zufuhr von in nachgelagerten Einrichtungen oder Vorrichtungen zu bearbeitenden Stoffen) zur Aufnahme von Schüttkegel bildenden Füllgütern, etc.

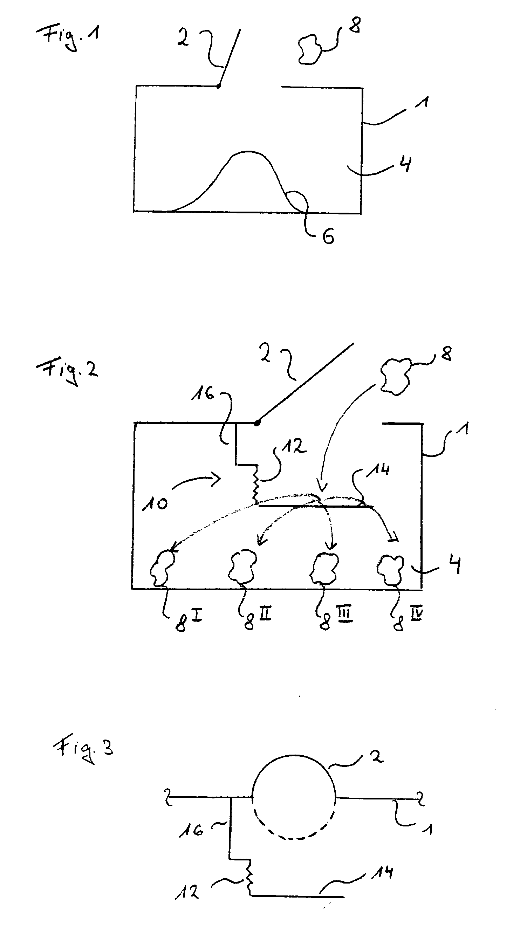

In Fig. 1 ist schematisch ein herkömmlicher Müllcontainer 1 dargestellt, der über eine als Klappe ausgebildete Zugriffseinrichtung 2 mit Müll befüllt werden kann. Aufgrund der Größe der Zugriffseinrichtung 2 und deren Anordnung an dem Container 1 bildet sich im Innenraum 4 des Containers 1 im wesentlichen unterhalb der Zugriffseinrichtung 2 eine Anhäufung 6 von Müll, die im folgenden als Schüttkegel oder Schüttberg bezeichnet wird. Dadurch wird das durch den Innenraum 4 vorgegebene Fassungsvolumen des Müllcontainers 1 nur unzureichend ausgenutzt, da sich in dessen Randbereichen nur geringe Müllmengen ansammeln. Dies ist insbesondere dann der Fall, wenn die Zugriffseinrichtung 2, nicht wie in Fig. 1 dargestellt, mittig sondern an der rechten oder linken Seite der Oberseite oder der rechten oder linken Seitenwand des Containers 1 angeordnet ist.

Um den Schüttkegel 6 zu vermeiden und das Fassungsvolumen des Müllcontainers 1 in höherem Maße auszunutzen, wird, wie in Fig. 2 dargestellt, eine im Innenraum 4 des Müllcontainers 1 angeordnete, im allgemeinen mit 10 bezeichnete Pralleinrichtung verwendet. Die Pralleinrichtung 10 ist relativ zu der Zugriffseinrichtung 2 so in dem Innenraum 4 angeordnet, daß in den Müllcontainer 1 eingebrachter Müll 8 die Pralleinrichtung 10 kontaktiert (auf die Pralleinrichtung 10 fällt). Um den Müll 8 beim Einbringen in den Müllcontainer 1 in dessen Innenraum 4 zu verteilen, weist die Pralleinrichtung 10 ein Federelement 12 und eine mit einem Ende des Federelementes 12 verbundene als Prailelement verwendete Prallfläche 14 auf. Mittels einer Befestigungseinrichtung 16, die mit dem anderen Ende des Federelementes 12 verbunden ist, ist die Pralleinrichtung 10 an der Innenseite der oberen Stirnfläche des Müllcontainers 1 angebracht. Die Pralleinrichtung 10 kann auch an anderen Stellen im Innenraum 4 des Müllcontainers 1 befestigt sein, solange die im folgenden beschriebene Funktion der Pralleinrichtung 10 zum Verteilen von Müll 8 bereitgestellt wird, um die Bildung eines Schüttkegels 6 zu vermeiden.

Wird Müll 8 in den Müllcontainer 1 eingebracht, fällt der Müll 8 mit einem durch die Fallhähe bestimmten Impuls auf die Prallfläche 14 und lenkt diese aufgrund ihrer federnden Befestigung mittels des Federelementes 12 aus. Dadurch fällt der Müll 8 nicht einfach auf den Boden des Mullcontainers 1, sondern wird durch die Prallfläche 14 seitwärts abgelenkt und in dem Müllcontainer 1 verteilt. Diese Verteilung des Mülls 8 in dem Innenraum 4 wird durch die von dem ausgelenkten Federelement 12 erzeugte Rückstellkraft verstärkt. Auf diese Weise wird der Müll 8 nicht nur durch die Prallfläche 14 abgelenkt, sondern auch aufgrund der Rückstellkraft des Federelementes 12 von dieser bewegt/beschleunigt, so daß der Müll 8 durch den Innenraum 4 "geschleudert" wird. Auf diese Weise wird der Müll 8 an die in Fig. 2 mit 8^{I}, ..., 8^{IV} bezeichnete Positionen im Innenraum 4 des Müllcontainers 1 verteilt. Die Elastizität des Federelementes 12 (also die sogenannte Federkonstante) ist dabei so ausgewählt, daß bei der gegebenen Fallhöhe und dem typischerweise gegebenen Gewicht des Mülls 8 der entstehende Impuls in Querrichtung aufgrund der Auslenkung der Pralleinrichtung 10 die homogene Verteilung (also Gleichverteilung) des Mülls im Behälter optimal fördert. Auch die Form der Prallfläche 14 ist in Abhängigkeit von der verwendeten Feder zur Erreichung dieses technischen Zieles angepaßt. Wie weiter unten noch näher beschrieben ist, ist die Prallfläche 14 bevorzugt nach oben gewölbt, so daß bei vertikalem Auftreffen des Mülls 8 auf die Prallfläche aufgrund der Elastizität derselben ein Rückstoß mit einer Bewegungskomponente in horizontaler Richtung entsteht, der in alle Richtungen (also rundum) statistisch verteilt ist und somit für eine gleichförmige Verteilung des Mülls im Behälter sorgt. Die Federkonstante der gefederten Aufhängung der Prallfläche 14, die Fallhöhe des Gutes und die Form der Prallfläche 14 werden in diesem Sinne empirisch optimiert, d.h. durch Versuche mit Müll, der den tatsächlichen Verhältnissen, statistisch gesehen, weitestgehend entspricht, werden die Federkonstante und die Prallfläche so ausgewählt, daß das Ziel der Gleichverteilung möglichst weitgehend erreicht wird.

Die Auslenkung/Bewegung der Prallfläche 14 durch auf diese treffenden Müll 8 und folglich des Federelementes 12 hängt von dem Bereich der Prallfläche 14, an dem der Müll 8 die Prallfläche 14 kontaktiert, und von der Art und Form des Mülls 8 (z.B. Gewicht, loser Müll, in Mülltüten verpackter Müll) ab. Bedingt durch die Zufälligkeit des Kontaktbereichs der Prallfläche 14 mit dem eingebrachten Müll 8 und der unterschiedlichen Art und Form aktuell eingebrachten Mülls ergibt sich eine zufällige Verteilung des Mülls 8 im Innenraum 4. Somit wird der in Fig. 1 gezeigte Schüttkegel 6 vermieden und das Fassungsvermögen des Müllcontainers 1 optimal ausgenutzt.

Studien, in denen die Ausnutzung des Fassungsvermögens des in Fig. 1 dargestellten Müllcontainers ohne Pralleinrichtung und des in Fig. 2 dargestellten Müllcontainers mit Pralleinrichtung verglichen wurde, haben gezeigt, daß sich bei einer Verwendung der Pralleinrichtung 10 die Menge einbringbaren Mülls um 100 % gegenüber dem Fall erhöht, in dem die Pralleinrichtung 10 nicht verwendet wird.

Bei einer Anwendung der Erfindung, beispielsweise in Form der Pralleinrichtung 10, bei Behältern zur Aufnahme von Füllgut im wesentlichen gleicher Art und Form (z.B. Granulate), die normalerweise nicht wie Müll chargenweise sondern kontinuierlichen eingebracht werden, ergibt sich die zufällige Verteilung des Füllgutes in dem entsprechenden Behälter im wesentlichen durch die Variation der Kontaktbereiche des Füllgutes mit der Prallfläche 14. Beim kontinuierlichen Einbringen derartiger Füllgüter wird die Prallfläche 14 und das Federelement 12 laufend (in unterschiedliche Richtungen) ausgelenkt, wodurch das Füllgut die Prallfläche 14 an unterschiedlichen Oberflächenbereichen derselben kontaktiert. Folglich wird das Füllgut von der Prallfläche 14 auch unterschiedlich abgelenkt und bewegt/beschleunigt, wodurch eine zufällige Verteilung des Füllgutes in dem entsprechenden Behälter und eine optimale Ausnutzung dessen Fassungsvolumens erreicht wird.

Für das Federelement 12 können beliebige bekannte Komonenten (Metall- und/oder Kunststoffedern, Fluidfederungen, Gasfederungen und beliebige Kombinationen derselben) verwendet werden, die eine elastische Verbindung der Prallfläche 14 mit der Befestigungseinrichtung 16 erlauben. Das Federelement 12 braucht nicht unbedingt ein besonderes Bauteil in Federform zu sein, vielmehr ist es auch möglich, den Prallkörper 10 so zu gestalten und so im Container 1 aufzuhängen, daß aufgrund der Form des Prallkörpers selbst und seiner Befestigung eine federnde Prallfläche 14 im obigen Sinn entsteht. Wenn nachfolgend von Eigenschaften des Federelementes 12 die Rede ist, soll dies den vorstehend genannten Fall sinngemäß auch betreffen und das Federelement wird durch den Prallkörper selbst und dessen Aufhängung bestimmt.

Um eine zur optimalen Ausnutzung des Fassungsvermögens des Müllcontainers 1 geeignete Verteilung des Mülls 8 zu gewährleisten, sollte das Federelement 12 in Abhängigkeit der zu erwartenden Art und/oder Form einzubringenden Mülls und/oder der Form der Prallfläche 14 dimensioniert werden. Um nutzungsabhängige Veränderungen der Charakteristik des Federelementes 12 (z.B. Nachlassen der Federkraft) ohne Austausch desselben oder der gesamten Pralleinrichtung 10 kompensieren zu können, sollte das Federelement 12 bevorzugt justierbar sein. Wird beispielsweise für das Federelement 12 eine Spiralfeder verwendet, kann eine Einstellbarkeit der Federkonstanten unter Verwendung einer entsprechenden Stellschraube (nicht gezeigt) ermöglicht werden.

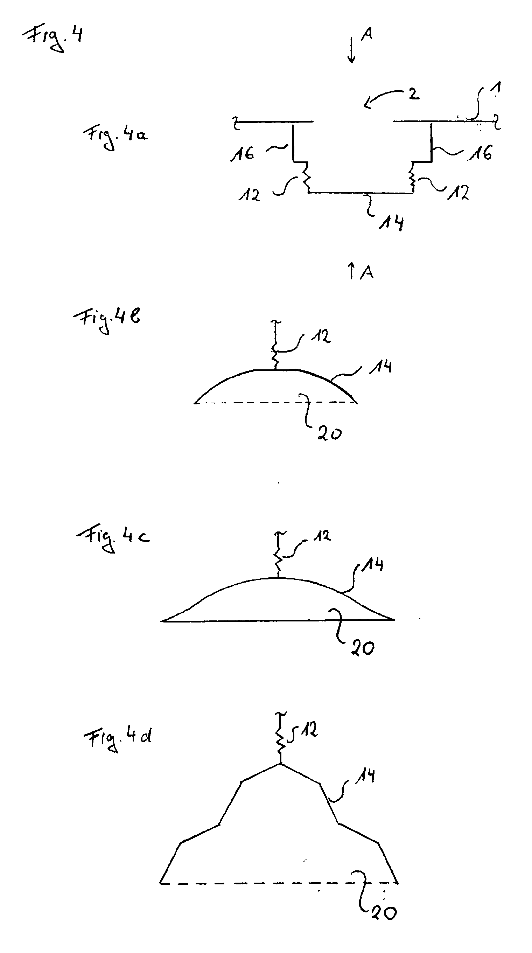

Wie in Fig. 3 dargestellt, kann die Pralleinrichtung 10 auch bei Zugriffseinrichtungen für Müllcontainer verwendet werden, die nach dem "Brotkastenprinzip" funktionieren. In Abhängigkeit von der Art und Form der jeweils verwendeten Zugriffseinrichtung ist die Pralleinrichtung 10 in dem Innenraum 4 so anzuordnen, daß die Zugriffseinrichtung in normaler Weise betätigt werden kann. So ist bei dem in Fig. 3 gezeigten Beispiel einer Brotkastenschleuse 18 die Pralleinrichtung 10 so in dem Müllcontainer 1 anzuordnen, daß die Brotkastenschleuse 18 in den in Fig. 3 gestrichelt dargestellten geöffneten Zustand gebracht werden kann. Gemäß einer bevorzugten Ausgestaltung der Erfindung wird die Müll- Verteilungsvorrichtung auch integral mit der Zugriffsvorrichtung geliefert, d.h. zusammen mit der Zugriffsvorrichtung wird die Verteileinrichtung zum Nachrüsten eines bestehenden Müllcontainers bereitgestellt.

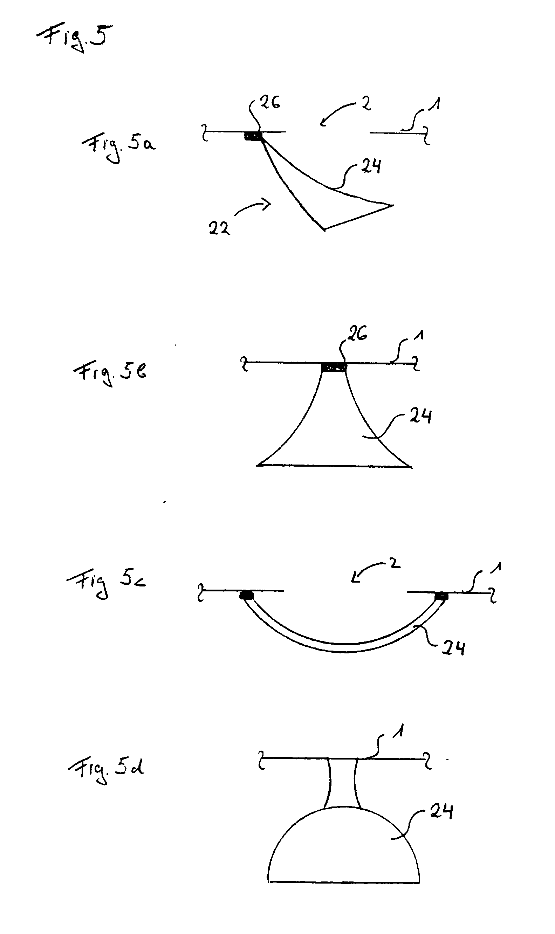

Fig. 4 zeigt weitere Ausführungsformen der Pralleinrichtung 10 von Fig. 2. So können beispielsweise anstelle eines Federelementes 12 zwei Federelemente 12 (Fig. 4a) verwendet werden, die in unterschiedlichen Bereichen der Prallfläche 14 befestigt sind. In diesem Fall werden normalerweise zwei Befestigungseinrichtungen 16 benötigt, um die Pralleinrichtung 10 im Innenraum 4 des Müllcontainers 1 anzuordnen und eine störungsfreie Befüllung mit Müll zu gewährleisten. Die Figuren zeigen schematisch nur einen Vertikalschnitt durch den Behälter mit der Müll- Verteilungsvorrichtung. Es versteht sich, daß in Richtung senkrecht zur Zeichnungsebene die Prallfläche 14 im Bezug auf die federnden Aufhängungen 12 so gestaltet ist, daß, statistisch gesehen, eine Rundum-Verteilung des Mülls erfolgt. Die Federelemente sind also möglichst so schmal gestaltet, daß sie keinen nennenswerten "Schatten" im Bezug auf die Müllverteilung erzeugen.

Bei der in Fig. 2 gezeigten im wesentlichen ebenen Prallfläche 14 kann es dazu kommen, daß in den Müllcontainer 1 eingebrachter Müll 8 auf der Prallfläche 14 liegen bleibt. Daher sollte die (obere) Oberfläche der Prallfläche 14, die von einzubringendem Müll kontaktiert werden kann, eine gekrümmte und/oder gewinkelte Form aufweisen. Beispiele für derartige Kontaktflächen der Prallfläche 14 sind in Fig. 4b, 4c und 4d skizziert. Wie in diesen Figuren durch die gestrichelten Linien angedeutet, kann die Prallfläche 14 durch einen, auch teilweise hohlen, Prallkörper 20 bereitgestellt werden. Die Verwendung des Prallkörpers 20 kann dann von Vorteil sein, wenn aufgrund der Art und Form einzubringenden Mülls oder anderer Füllgüter und/oder der Abmessungen des Müllcontainers 1 oder anderer entsprechender Behälter die Auslenkung der Prallfläche 14 auch durch die Masse des Prallkörpers 20 bestimmt werden soll. Wird beispielsweise Müll hohen Gewichts in den Müllcontainer 1 eingebracht, kann durch die Verwendung eines Prallkörpers 20 mit großer Masse die Auslenkung der Prallfläche 14 begrenzt werden, um zu verhindern, daß der Müll in Randbereiche des Müllcontainers 1 verteilt wird und dort möglicherweise an den Seitenwänden des Müllcontainers 1 unerwünschte Schüttberge entstehen. Die Verwendung des Prallkorpers 20 erlaubt es auch in Abhängigkeit der jeweiligen Anwendung einfachere und/oder kostengünstigere Komponenten für das Federelement 12 zu verwenden, ohne dabei die gewünschte Verteilung des Mülls 8 in dem Müllcontainer 1 zu verhindern. Die in den Figuren 4a bis 4d schematisch gezeigten Prallflächen 14 sind im wesentlichen rotationssymmetrisch gestaltet, d.h. die gezeigte konkave, nach oben gewölbte Formgebung wirkt in allen Richtungen rundum.

In Fig. 5 sind weitere Ausführungsformen einer Pralleinrichtung dargestellt. Die dort gezeigten Pralleinrichtungen 22 weisen als Prallflächen oder Praliflächen umfassende Prallkörper ausgebildete Prallelemente 24 auf. Die Prallelemente 24 sind mittels, vorzugsweise baueinheitlich darin ausgeformten, Befestigungen 26 an dem in Fig. 5 teilweise dargestellten Müllcontainer 1 befestigt. Da bei diesen Ausführungsformen keine separaten Federelemente 12 verwendet werden, sind hier die Prallelemente 24 wenigstens teilweise elastisch, um, wie oben beschrieben, beim Einbringen von Müll ausgelenkt zu werden. Hierbei können die Prallelemente 24 beispielsweise in den den Befestigungen 26 benachbarten Bereichen oder vollständig elastisch sein, um die oben beschriebene Federfunktion des Federelementes 12 bereitzustellen. Wie unter Bezugnahme auf Fig. 4 erläutert, können auch hier Prallelemente 24 mit unterschiedlichen Prallflächen 14 verwendet werden, die an einem entsprechenden Prallkörper 20 ausgebildet sind. Des weiteren ist auch hier die Verwendung von mehr als einer Befestigung 26 für eine Pralleinrichtung 22 vorgesehen. Beispiele für solche Modifikationen sind in Fig. 5a, 5b, 5c und 5d zu sehen.

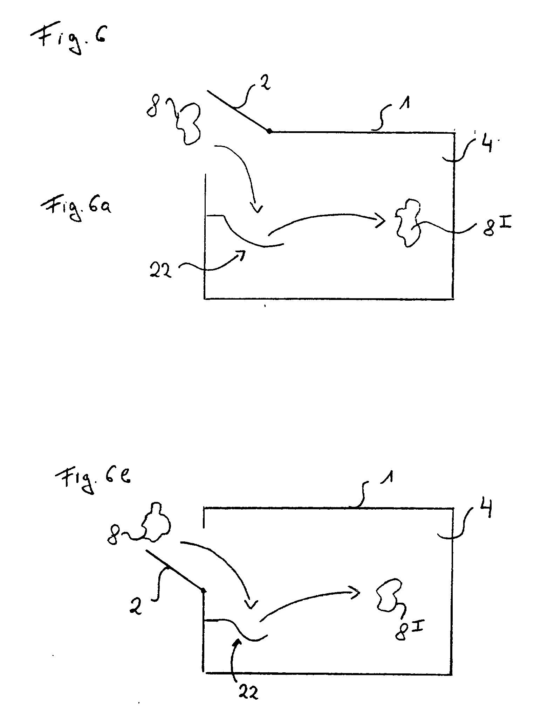

Die Verwendung der in Fig. 5 gezeigten Pralleinrichtung 22 bietet sich bei Müllcontainern 1 an, deren, wie in Fig. 6 gezeigt, Zugriffseinrichtungen 2 in einem die obere Stirnfläche und die seitliche Stirnfläche des Müllcontainers 1 überbrükkenden Bereich (Fig. 6a) oder an einer seitlichen Stirnfläche des Müllcontainers 1 (Fig. 6b) angeordnet sind. Derartig angeordnete Zugriffseinrichtungen 2 erleichtern zwar das Befüllen des Müllcontainers 1 mit Müll, aber insbesondere die Bereiche des Innenraums 4 auf der anderen, gegenüberliegenden Seite des Müllcontainers 1 werden nur schlecht ausgenutzt. Daher werden in diesen Fällen normalerweise Müllcontainer 1 verwendet, die von der Zugriffseinrichtung 2 aus gesehen, eine geringe Tiefe aufweisen (i.e. horizontale Ausdehnung der Müllcontainer 1 in Fig. 6).

Die Verwendung der Pralleinrichtung 22, die wie in Fig. 6 dargestellt zur Verteilung von Müll in dem Innen-raum 4 benachbart, im Bereich der Zugriffseinrichtung 2 angeordnet ist, erlaubt nicht nur eine bessere Ausnutzung des Fassungsvermögens des Müllcontainers 1, sondern auch die Verwendung Müllcontainer größerer Tiefe, da (bei entsprechender Dimensionierung der Pralleinrichtung 22) Müll von der Seite, von der der Müll durch die Zugriffseinrichtung 2 in den Innenraum 4 eingebracht wird, in dieser Seite gegenüberliegende Bereiche des Innenraums 4 befördert (geschleudert) wird.

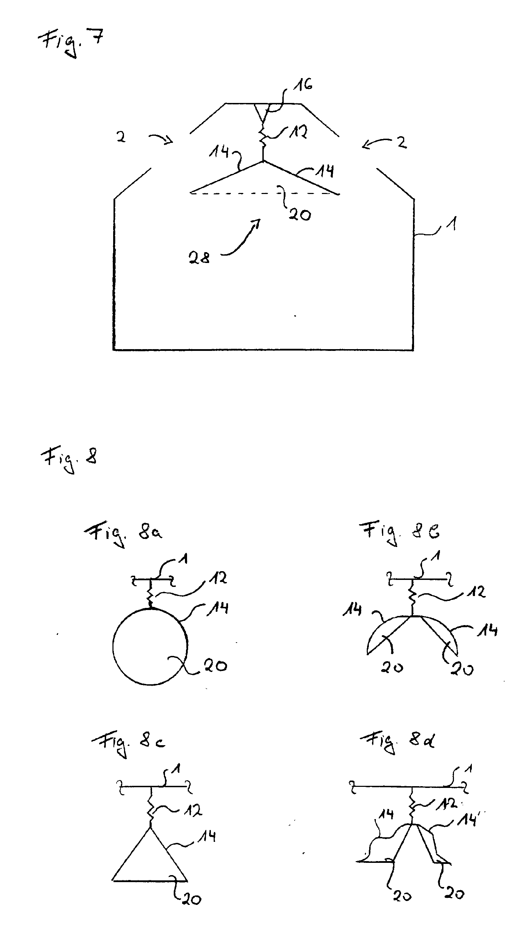

Bei Müllcontainern mit mehreren Zugriffseinrichtungen kann jeder der Zugriffseinrichtungen eine der in Fig. 2 und 5 gezeigten Pralleinrichtungen 10 oder 22 zugeordnet oder eine, wie in Fig. 7 dargestellt, Pralleinrichtung 28 verwendet werden, die den Zugriffseinrichtungen 2 zugeordnete Prallflächen 14 aufweist. Hierbei können neben den genannten Komponenten für das Federelement 12 auch flexible elastische Komponenten, wie z.B. Gummiseile oder -bänder, Kunststoff- und/oder Metallseile-, -bänder und -körper, verwendet werden. Des weiteren ist es in derartigen Fällen vorgesehen, anstelle des Federelementes 12 die Pralleinrichtung 28 vergleichbar zu der in Fig. 5 gezeigten Pralleinrichtung 22 wenigstens teilweise flexibel, federnd auszugestalten.

Außerdem ist es hier möglich, das Federelement 12 durch eine Komponente (nicht gezeigt) zu ersetzen, die eine bewegliche Verbindung der Prallflächen 14 mit dem Müllcontainer 1 bereitstellt. Beispiele hierfür sind Seile und Bänder sowie gelenkig mit dem Müllcontainer 1 und/oder den Prallflächen 14 verbundene Stäbe und Stangen. Bei der zuletzt genannten Ausführungsform lenkt in den Müllcontainer 1 eingebrachter Müll beim Auftreffen/Kontaktieren einer der Prallflächen 14 die Pralleinrichtung 28 pendelartig aus. Die Zurückbewegung (Rückschwingen) der Pralleinrichtung 28 sorgt dann für die Verteilung des Mülls in dem Innenraum 4. Damit hierbei eingeworfener Müll die Pralleinrichtung 28 nicht einfach wegbewegt und wie bei einem herkömmlichen Müllcontainer ohne Pralleinrichtung nach unten fällt, und einen unerwünschten Schüttkegel bilden kann, ist es hier vorteilhaft, vergleichbar zu Fig. 4, die Prallflächen 14 an einem gemeinsamen oder jeweils an einem Prallkörper auszubilden. Beispiele für solche Ausführungen mit Prallkörpern 20 unterschiedlicher Form und Anzahl und anwendungsspezifisch geformten Prallflächen 14 sind in Fig. 8a, 8b, 8c und 8d dargestellt.

Um Behälter, wie z.B. Müllcontainer, auf einfache Weise mit Pralleinrichtungen nachzurüsten oder Pralleinrichtungen auf den Befüllvorgang zeitlich begrenzt zu verwenden, wird, wie in Fig. 8 dargestellt, die Pralleinrichtung 10 oder 22 mittels einer Montageeinrichtung 30 angeordnet. Die Montageeinrichtung 30 wird im Bereich der hier als Öffnung dargestellten Zugriffseinrichtung 2 so an einer Außenfläche des Müllcontainers 1 angebracht, daß die Pralleinrichtung 10 oder 22 in geeigneter Weise an dem Müllcontainer 1 gesichert und im Innenraum 4 positioniert ist, um die Verteilung von Müll in diesem zu gewährleisten. In Abhängigkeit der jeweiligen Zugriffseinrichtung 2 kann die Montageeinrichtung 30 eine beispielsweise ringförmige Struktur aufweisen, die angepaßt an den Außenumfang der Zugriffseinrichtung 2 angepaßt diese wenigstens teilweise umschließend umgibt. Die Montageeinrichtung 30 kann unter Verwendung von Schraub-, Kleb-, Rast/Klemm-, Schweißverbindungen und dergleichen an dem Müllcontainer 1 gesichert werden. Bei einer zeitlich begrenzten Verwendung der Pralleinrichtung 10 oder 22 kann auch eine Montageeinrichtung 30 verwendet werden, die aufgrund ihrer Masse eine geeignete Sicherung und Positonierung der Pralleinrichtung 10 oder 22 bereitstellt.

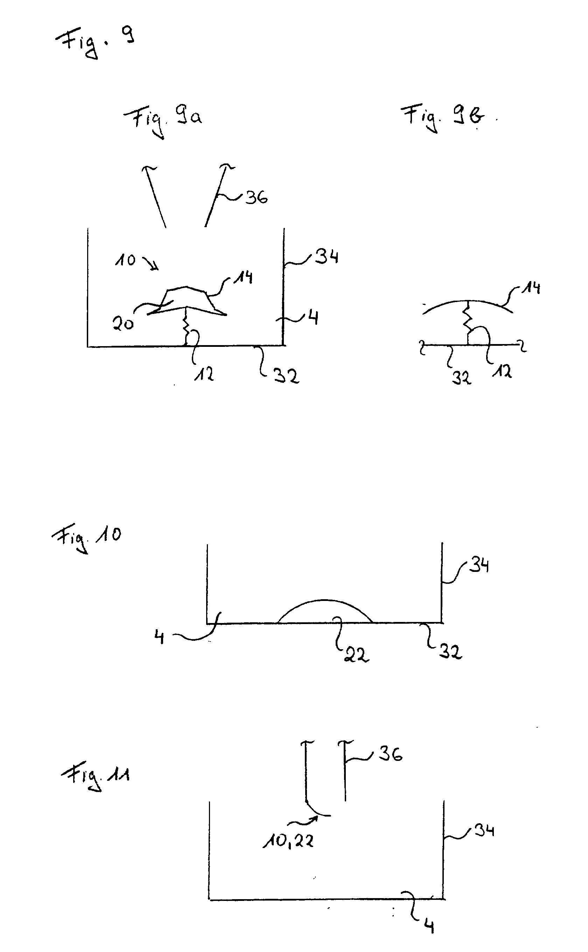

Im folgenden werden Ausführungsformen erläutert, die nicht nur zur Verwendung bei den zuvor genannten Typen von Behältern geeignet sind, sondern auch bei Behältern verwendet werden können, die offene Behälter sind. In Abhängigkeit des Befüllvorganges, genauer der Positionierung eines offenen Behälters relativ zu einer entsprechenden zum Befüllen verwendeten Vorrichtung, ist es möglich, daß die Anordnung einer Pralleinrichtung vergleichbar zu der unter Bezugnahme auf Fig. 6 beschriebenen Anordnung an einer Seitenwand des Behälters nicht die gewünschte Verteilung gewährleistet. In solchen Fällen, kann wie in Fig. 9 dargestellt, die Pralleinrichtung 10 an einer inneren Bodenfläche 32 eines offenen Behälters 34 befestigt werden. Hierbei ist die Pralleinrichtung 10 gegenüber einer Befüllvorrichtung 36 (z.B. Füllrohr oder -trichter) auszurichten, damit in den Behälter 34 einzufüllendes Gut auf die Prallfläche 14 trifft und in dem Innenraum 4 verteilt wird. Die unter Bezugnahme auf die zuvor beschriebenen Ausführungsformen genannten Modifikationen der Prallfläche 14 und der Verwendung von die Prallfläche 14 aufweisenden Prallkörpern sind auch hier vorgesehen.

Ferner ist es vorgesehen, bei offenen Behältern auch mit der unter Bezugnahme auf Fig. 5 beschriebenen Pralleinrichtung 22 vergleichbare Pralleinrichtungen zu verwenden. Ein Beispiel hierfür ist in Fig. 10 gezeigt. Die halbkugelig geformte Pralleinrichtung 22 ist auf dem Boden 32 des Behälters 34 angeordnet und besteht aus einem federnden, elastischen Material (z.B. Gummi). Anstelle der hemisphärischen Form kann die Pralleinrichtung 22 auch pyramidenartig, pyramidenstumpfartig, kegelartig und dergleichen ausgebildet sein.

In Abhängigkeit der in offene Behälter zu füllenden Gütern z.B. Granulate, (kleine) Spritz- und Stanzteile), die üblicherweise in viele verschiedene offene Behälter gefüllt werden, kann es zu aufwendig sein, jeden der Behälter mit einer der in Fig. 9 oder 10 gezeigten Pralleinrichtung auszustatten. Um dennoch derartige Güter ohne Bewegung der verwendeten offenen Behälter und/oder der entsprechenden Befullvorrichtung in den Behältern optimal zu verteilen und deren Fassungsvermögen auszunutzen, kann die Pralleinrichtung 10 oder 22 auch an der jeweiligen Befüllvorrichtung angebracht werden.

Wie in Fig. 11 dargestellt, ist die Pralleinrichtung 10 oder 22 an der Ausgabeöffnung (nicht bezeichnet) der Befüllvorrichtung 36 angeordnet und sorgt, wie zuvor beschrieben, für eine gewünschte Verteilung von in den offenen Behälter 34 einzufüllenden Gütern.

Da die Pralleinrichtung beim Befüllen eines Behälters von den einzufüllenden Gütern kontaktiert wird, kann die Pralleinrichtung verwendet werden, um das Gewicht eingebrachter Güter zu ermitteln. Hierfür wird in Verbindung mit der Pralleinrichtung eine Sensoreinrichtung verwendet, die die auf die Pralleinrichtung wirkenden Kräfte beim jeweiligen Kontakt mit einzubringenden Gütern ermittelt. Beispiele für solche Sensoreinrichtungen sind Kraftmeßdosen, Biegemetallstreifen, piezostriktive Sensoren, Drucksensoren, Beschleunigungssensoren und dergleichen, die in Abhängigkeit ihrer Charakteristika an der Pralleinrichtung anzuordnen sind. Auf diese Weise ist es möglich, den Befüllvorgang für einen Behälter abzubrechen und/oder keine weiteren Befüllungen zuzulassen, wenn ein vorgegebenes Gewicht erreicht wird.

Unter Verwendung einer solchen Sensoreinrichtung kann auch die Richtung der Auslenkung der Pralleinrichtung ermittelt werden, um auf diese Weise die Richtung zu bestimmen, in der in einen Behälter eingebrachte Güter verteilt werden. Um die Verteilung von Gütern in einem Behälter genauer zu ermitteln, kann ergänzend oder alternativ zur Ermittlung der Verteilungsrichtung die "Verteilungsdistanz" ermittelt werden. Basierend auf den wie oben beschrieben ermittelten auf die Pralleinrichtung wirkenden Kräfte können die jeweiligen auf die Güter wirkenden von der Pralleinrichtung erzeugten (Bewegungs-)kräfte ermittelt werden. Alternativ ist es vorgesehen, die auf die Güter wirkenden Kräfte unmittelbar mittels der Sensoreinrichtung zu bestimmen. Auf der Grundlage der auf die Güter wirkenden Kräfte kann dann bestimmt werden, über welche Distanzen die Güter von der Pralleinrichtung in einem Behälter verteilt werden. Unter Berücksichtigung der Verteilungsrichtung und/oder -distanz kann die tatsächliche Verteilung von Gütern in einem Behälter (näherungsweise) ermittelt werden, um beispielsweise Befüllvorgänge abzubrechen oder weitere Befüllungen zu verhindern.

Des weiteren können basierend auf mittels der Sensoreinrichtung erfaßten Größen und/oder daraus ermittelter Parameter eine aktive Steuerung der Pralleinrichtung bereitgestellt werden. Hierbei werden anstelle für oder in Verbindung mit Komponenten, die als Federelement 12 dienen, steuerbare Komponenten verwendet, um die Charakteristik des Federelementes 12 in Abhängigkeit einzubringender Güter und/oder deren Verteilung in einem Behälter zu variieren. Beispiele für derartige aktive Komponenten sind hydraulisch, pneumatisch, mechanisch und piezostriktiv betriebene Komponenten, deren Federcharakteristik gesteuert werden kann. Auf diese Weise ist es beispielsweise möglich, das Ausmaß von Ablenkungen der Pralleinrichtung durch Güter auf bestimmte Richtungen und/oder Orientierungen einzuschränken, um Güter in dem Behälter in Bereiche zu verteilen, in denen im Vergleich zu anderen Bereichen des Behälters weniger Güter gesammelt/verteilt wurden. In bestimmten Anwendungsfällen kann es auch vorteilhaft sein, die aktiven Komponenten des Federelementes 12 dazu zu verwenden, auf in einem Behälter zu verteilende Güter wirkende Kräfte gesteuent zu verstärken, um beispielsweise leichte Güter, die geringere Ablenkungen der Pralleinrichtung verursachen, über größere Distanzen in einem Behälter zu verteilen.

## Patentansprüche

1. Vorrichtung zur Verteilung von Gütern in einem Behälter, der in seinem oberen Bereich eine Öffnung aufweist, durch die die Güter in ihn einfüllbar sind,
**dadurch gekennzeichnet, daß** in Fallrichtung unterhalb der Öffnung eine Pralleinrichtung (10, 22, 28) vorgesehen ist, die eine gleichmäßige Verteilung der Güter in dem Behälter fördert.

2. Vorrichtung nach Anspruch 1, wobei
die Pralleinrichtung (10, 22, 28) beim Einbringen eines Gutes (8) in den Behälter (1) durch Kontakt mit dem Gut (8) aus einem Ruhezustand bewegbar und eingerichtet ist, bei einer Bewegung in den Ruhezustand in Antwort auf die durch den Kontakt verursachte Bewegung zur Verteilung des Gutes (8) im Innenraum (4) des Behälters (1) auf das Gut (8) Kräfte auszuüben.

3. Vorrichtung gemäß einem der Ansprüche 1 oder 2, **dadurch gekennzeichnet, daß** die Pralleinrichtung (10, 22, 28) aufweist:
- wenigstens eine Prallfläche (14), und/oder
- wenigstens einen Prallkörper (20) mit wenigstens einer Prallfläche (14).

4. Vorrichtung nach einem der vorhergehenden Ansprüche, **dadurch gekennzeichnet, daß** die Pralleinrichtung (10, 22, 28) derart gefedert ist, daß beim Auftreffen des Gutes auf die Pralleinrichtung das Gut mit Bewegungskomponenten quer zur Fallrichtung von der Pralleinrichtung abprallt.

5. Vorrichtung gemäß einem der vorhergehenden Ansprüche, **dadurch gekennzeichnet, daß** die Pralleinrichtung (10, 22, 28) aufweist:
- wenigstens ein mit der wenigstens einen Prallfläche (14) und/oder dem wenigstens einen Prallkörper (20) verbundenes Federelement (12), und/oder
- wenigstens eine mit der wenigstens einen Prallfläche (14) und/oder dem wenigstens einen Prallkörper (20) verbundene Einrichtung zur pendelartigen Aufhängung der wenigstens einen Prallfläche (14) und/oder des wenigstens einen Prallkörpers (20).

6. Vorrichtung gemäß einem der vorhergehenden Ansprüche, **dadurch gekennzeichnet, daß**
- die Pralleinrichtung (10, 22, 28) federartige, elastisch verformbare Bereiche umfaßt,
- die wenigstens eine Prallfläche (14) federartig elastisch verformbar ist, und/oder
- der wenigstens eine Prallkörper (20) federartig elastisch verformbar ist.

7. Vorrichtung gemäß einem der vorhergehenden Ansprüche, **dadurch gekennzeichnet, daß**
- die Pralleinrichtung (10, 22, 28) zur Anordnung im Innenraum (4) des Behälters (1) im wesentlichen unterhalb einer Zugriffseinrichtung (2) für den Behälter (1) ausgelegt ist.

8. Vorrichtung gemäß einem der vorhergehenden Ansprüche, mit:
- einer Sensoreinrichtung zur Erfassung von auf die Pralleinrichtung (10, 22, 28) wirkenden und/oder von der Pralleinrichtung (10, 22, 28) erzeugten Kräften.

9. Müllcontainer mit einer Verteilungsvorrichtung gemäß einem der vorhergehenden Ansprüche.

10. Behälter, mit:
- einer Öffnung zur Zufuhr von Gütern, deren Abmesesungen wesentlich größer als die Abmessungen von in den Behälter (34) einzubringenden Gütern ist, und
- einer Verteilungsvorrichtung gemäß einem der Ansprüche 1 bis 8.

11. Vorrichtung zum Befüllen eines Behälters, mit:
- einer der Vorrichtung (36) angeordneten Verteilungsvorrichtung gemäß einem der Ansprüche 1 bis 8.
